# EUROPEAN PATENT SPECIFICATION

(11) **EP 3 094 468 B1**
(45) Date of publication and mention of the grant of the patent: **01.01.2020**
(21) Application number: 15705708.4
(22) Date of filing: 16.01.2015
(51) Int. Cl.: B29C 65/08, B29C 65/74, B65B 51/22, B65B 11/50, B65B 61/06, B26D 1/62

(54) **ULTRASOUND DEVICE FOR SEALING AND CUTTING**
ULTRASCHALLVORRICHTUNG ZUM VERSIEGELN UND SCHNEIDEN
DISPOSITIF À ULTRASONS POUR LE SCELLEMENT ET LE DÉCOUPAGE

(30) Priority: 17.01.2014 IT BO20140017
(43) Date of publication of application: 23.11.2016
(73) Proprietor: I.M.A. Industria Macchine Automatiche S.p.A., 40064 Ozzano dell'Emilia (BO) (IT)
(72) Inventor: RIVOLA, Sauro, I-48025 Riolo Terme (Ravenna) (IT); BETTI, Cristian, I-40026 Imola (Bologna) (IT)
(74) Representative: Milli, Simone
(86) International application number: PCT/IB2015/050330
(87) International publication number: WO 2015/107484

(56) References cited:
- EP-A1- 1 043 055
- EP-A1- 1 510 459
- DE-A1- 10 359 036
- JP-A- H03 240 632
- JP-A- S59 214 612
- JP-A- 2003 312 603

## Description

### Technical field

This invention relates to an ultrasound device for sealing and cutting, in particular for sealing and cutting material in sheets or strips for closing containers, for example for solid infusion or extraction products (filter bags, capsules and similar containers), or for liquid or gel products.

### Background art

In the technical field of sealing and cutting devices, the prior art teaches the use of ultrasound sealers and/or knives, which allow a precise processing of two materials superposed on each other, such as, for example, the sealing of edges of containers with strips of thermoplastic film and their corresponding separation from the continuous strips of the materials.

An ultrasound sealer or knife comprises a sonotrode which transmits mechanical vibrations to the material to be sealed and/or cut and a anvil which operates as a contact element for the material to be sealed and/or cut and the sonotrode.

In practice, the sonotrode transmits energy by contact with the material, which, by melting, is sealed and/or separated.

There are two types of ultrasound devices used for sealing and/or cutting operations:
- "heat-sinking" sealing devices, wherein the sonotrode is movable in an alternating manner along a single direction towards and away from the material to be sealed, and the anvil is stationary, or rotary; and
- rotary sealing devices, in which both the sonotrode and the anvil can be rotated, generally continuously, about mutually parallel axes of rotation. The sonotrode comprises an operating profile configured for sealing and/or cutting the superposed materials.

The anvil is equipped with one or more sections of contact surfaces correlated with the operating profile of the sonotrode (in some cases also one or more impressions shaped to match the operating profile of the sonotrode) to define the region to be sealed and/or cut of the superposed materials.

EP 1 510 459 A1 discloses an ultrasonic sealing and cutting device for sealing and cutting material in sheet or strip for closing container. The device comprises: a sonotrode emitting mechanical vibrations and having a first profile and a body having a second profile cooperating with the first profile of the sonotrode to define a sealing and cutting region.

There are two operating solutions to perform the sealing and cutting of materials with these ultrasound devices, irrespective of the type of operating structure of the devices described above.

In a first embodiment, the sonotrode and the anvil are configured to perform the step of sealing and the step of cutting (separating) materials in strips or sheets in a single operation.

However, this first embodiment, due to high operating speeds, has drawbacks, since it is not possible to simultaneously guarantee sealing efficiency and cutting efficiency, with the result that the material is sometimes not sealed correctly, or not cut correctly.

Moreover, even at reduced operating speeds and in particular in machines with continuous movement, it is difficult to make sealing and cutting profiles for material of the type with a closed and complex perimeter.

This is a widespread problem for products in which the sealing and cutting finish has a significant commercial value.

In the second embodiment, the production systems or machines comprise two separate stations for sealing (by ultrasound) and separating (cutting or shearing) the material.

However, there are also drawbacks with this second embodiment.

In effect, passing from the sealing station to the cutting station, the sealed material can move relative to the feed line: this can result in the cutting of a part which is not sealed with consequent opening of the container.

### Aim of the invention

The aim of this invention is to provide an ultrasound device for sealing and cutting which overcomes the drawbacks described.

More specifically, the aim of this invention is to provide an ultrasound sealing and cutting device, in particular for sealing and cutting material in sheets or strips for closing containers, for example, solid infusion or extraction products, or liquid or gel products, which is able to perform the sealing and cutting operations in a single station in a fast, precise and safe manner.

A further aim of this invention is to provide an ultrasound sealing and cutting device, in particular for sealing and cutting material in sheets or strips for closing containers, which is capable of operating in any type of system or machine (in step or continuous mode), both at high and average-low production speeds and irrespective of the complexity of the profiles to be defined.

These aims are fully achieved by the ultrasound sealing and cutting device, in particular for sealing and cutting material in sheets or strips, for example, for closing containers for solid infusion or extraction products, or liquid or gel products, according to this invention as characterised in the appended claims.

More specifically, the ultrasound sealing and cutting device for sealing and cutting material in sheets or strips, advantageously for closing containers for solid infusion or extraction products, or liquid or gel products, comprises a sonotrode for emitting mechanical vibrations having a first profile and a contact body having a second profile acting in conjunction with the first profile of the sonotrode to define a sealing and cutting region. According to the invention, the first profile of the sonotrode or the second profile of the contact body comprises a first face and a second face joined together in a shared cutting edge.

According to the invention, the first face has a first angle of inclination relative to a plane in which it lies coincident with a portion of material in sheets or in strips passing in the sealing and cutting region.

Also according to the invention, the second face has a first angle of inclination relative to the plane in which it lies coincident with the portion of material in sheets or in strips passing in the sealing and cutting region. According to the invention, the first angle of the first face has a value different from the value of the second angle of the second face, so as to define an asymmetric profile.

Again according to the invention, at least the contact body has an impression on the edge of which, with a closed perimeter and protruding from the contact body, there is the second profile to delimit the closed sealing and cutting region in conjunction with the first profile of the sonotrode.

The different angles, therefore the asymmetry of the two faces forming the first or the second profile determine a different a function of the faces on the material to be processed.

Thanks to this architecture, it is therefore possible to perform a precise sealing and cutting on the material with a single sonotrode (and single contact body) precisely thanks to their geometrical structure which allows a simultaneous operational interaction on the material which is thus sealed and cut.

More specifically, it is possible to prevent the risk of cutting the material in zones not sealed, with consequent opening of the container. With the sealing and cutting device according to this invention it is therefore possible to make sealing zones of reduced width, with obvious advantages in terms of appearance of the container, because it is no longer necessary to extend the sealing zone to avoid cutting the material in zones not sealed.

Preferably, the first face and the second face define a cutting edge with a closed perimeter.

Preferably, the first profile and the second profile define a sealing and cutting region with a closed perimeter.

Advantageously, the first face defines an outer cutting surface in the sealing and cutting region and the second face defines an inner sealing surface in the sealing and cutting region. Alternatively, the first face defines an inner cutting surface in the sealing and cutting region and the second face defines an outer sealing surface in the sealing and cutting region.

Advantageously, the asymmetry of the two sealing and cutting faces allows a high output and precision irrespective of the shape of the end product.

The shapes to be sealed and cut may be of a linear type with a continuous and open profile.

The shapes to be sealed and cut may have a closed and complex perimeter profile (that is to say, geometrically complex shapes).

The complex shapes may be achieved with one or the other, or both, the first profile and the second profile lying on curved surfaces (for example, made on rotary drums, even continuously).

The asymmetric geometrical structure of the two faces forming the cutting edge can be adapted to any type of sealing and cutting device, such as devices with continuous, discontinuous or step movement, maintaining a high level of precision both for sealing and cutting the material, even at high operating speeds, allowing it to make small size seals without the risk of cutting material not sealed.

### Brief description of the drawings

These and other features of the invention will become more apparent from the following detailed description of a preferred, non-limiting embodiment of it, with reference to the accompanying drawings, in which:
- Figure 1 shows a schematic side view, with some parts cut away in order to better illustrate others, of an ultrasound device, according to this invention, for sealing and cutting, in particular for sealing and cutting material in sheets or strips for closing containers for solid, liquid or gel products;
- Figure 2 is a front view, with some parts cut away to better illustrate others, of the sealing and cutting device of Figure 1;

- Figure 3 shows a scaled-up detail A of a second profile of a contact body forming part of the sealing and cutting device of Figures 1 and 2;
- Figure 4 shows a schematic side view, with some parts cut away in order to better illustrate others, of a second embodiment of an ultrasound device, which does not form part of this invention, for sealing and cutting, in particular for sealing and cutting material in sheets or strips for closing containers for solid, liquid or gel products;
- Figure 5 shows a scaled-up detail B of the cutting and sealing device of Figure 4;
- Figure 6 shows the detail B in a further enlarged scale with some parts cut away to better illustrate others.

### Detailed description of preferred embodiments of the invention

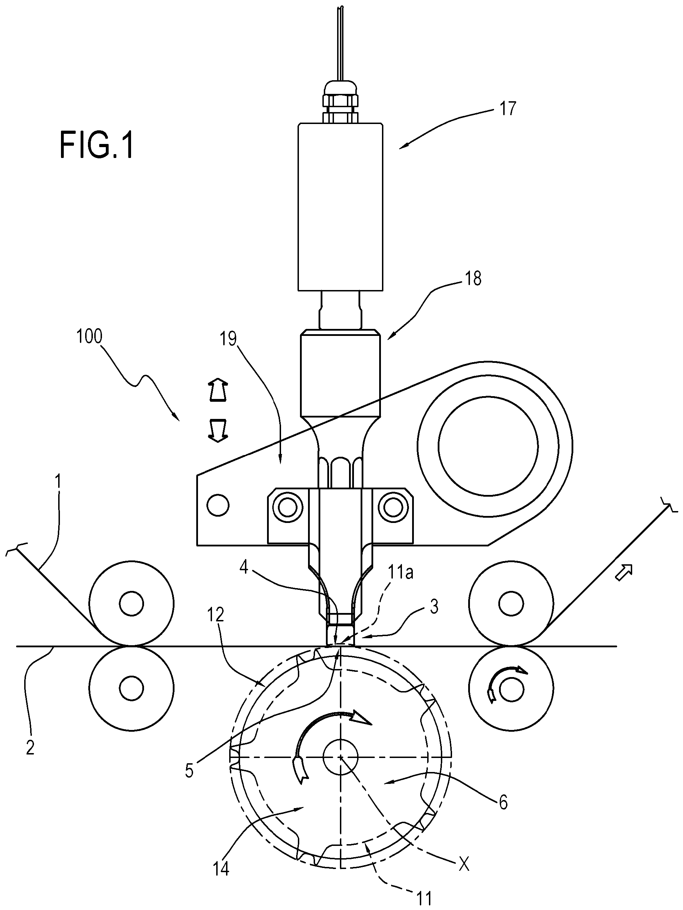

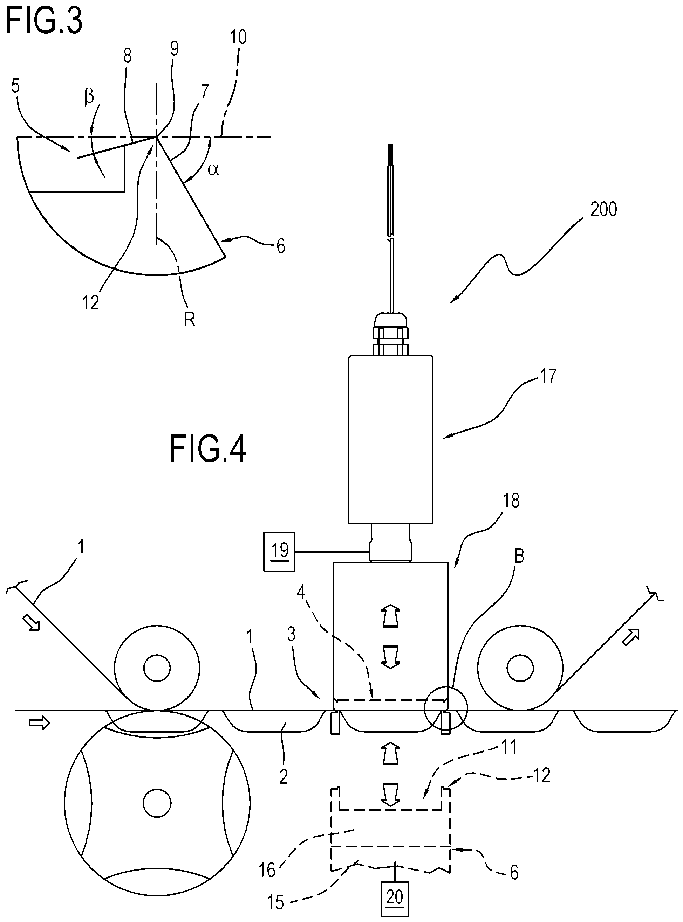

The accompanying drawings show a first embodiment of the ultrasound device for sealing and cutting according to this invention (denoted in its entirety by the numeral 100 in Figure 1) and a second embodiment of an ultrasound device for sealing and cutting which does not form part of this invention (denoted in its entirety by the numeral 200 in Figure 4), for sealing and cutting a material 1 in sheets or strips. Advantageously, the material 1 in sheets or strips may be used for enclosing a dose of solid, liquid or gel product for extraction or infusion or for closing containers 2 containing solid, liquid or gel products for infusion or extraction. Advantageously, the material 1 may also comprise one, two or more sheets or strips superposed.

For example, the material 1 in sheets or strips (preferably continuous) is fed towards the device 100, or 200, in such a way as to superpose a further strip (preferably continuous) defining a succession of containers 2 already filled with a dose of infusion or extraction product.

Alternatively, the material 1 in sheets or strips may be folded back on itself (to contain a dose of product), so that free edges of the material 1 are superposed, and such as to be sealed and cut.

The sealing and cutting device (100, 200) comprises a sonotrode 3 for emitting mechanical vibrations having a first profile 4 and a contact element 6, or anvil, having a second profile 12. The first profile 4 of the sonotrode 3 and the second profile 12 of the contact body 6 act in conjunction to define a sealing and cutting region 5.

In light of this, the material 1 in sheets or strips (preferably continuous) and the succession of containers 2 (preferably continuous) are fed between the sonotrode 2 and the contact body 3.

According to the invention, the first profile 4 of the sonotrode 3 or the second profile 12 of the contact body 6 comprises a first face 7 and a second face 8 joined together at a shared cutting edge 9. For example, the cutting edge 9 can form an edge or a vertex.

Also according to the invention, the first face 7 of the cutting edge 9 has a first angle α of inclination relative to a plane 10 in which it lies coincident with a portion of material 1 in sheets or in strips passing in the sealing and cutting region 5.

Also according to the invention, the second face 8 of the cutting edge 9 has a second angle β of inclination relative to the plane 10 in which it lies. Again according to the invention, the first angle α of the first face 7 has a value different from the value of the second angle β of the second face 8. Also according to the invention, at least the contact body 6 has an impression 11 on the edge of which, with a closed perimeter and protruding from the contact body 6 (that is, from its surface), there is the second profile 12 in such a way as to delimit the sealing and cutting region 5 in conjunction with the first profile 4 of the sonotrode 3.

The delimitation of the sealing region 5 is, therefore, delimited solely by the two profiles 4 and 12.

The term "impression" 11 means a hollow surface (or cavity) made (in this case) on the contact body 6 .

The cavity has an edge (outer) delimiting the perimeter shape of the impression 11 on which the second profile 12 of the contact body 6 is made.

It should be noted that the impression 11 of the contact body 6, having a defined depth, allows the housing of the container 2.

In light of this, the impression 11 of the contact body 6 extends (in depth) away from the plane 10 in which it lies.

It should also be noted that the second profile 12 is continuous, that is, without interruptions on its surfaces, along the entire extension of the edge of the impression.

In the first embodiment of Figures 1 to 3, the cutting edge 9 is made on the contact body 6. In the second embodiment of Figures 4 to 6, which does not form part of the invention, the cutting edge 9 is made on the sonotrode 3.

In other words, in the first embodiment of Figures 1 to 3, the second profile 12 of the contact body 6 defines the cutting edge 9. More specifically, the second profile 12 has an asymmetric shape defined by the various angles of inclination presented by the first and the second face 7 and 8 forming the cutting edge 9 (as clearly shown in Figure 3). The asymmetry between the two faces 7 and 8 is also shown clearly by the axis or straight line R passing through the cutting edge 9 shared between the two faces 7 and 8 and perpendicular to the plane 10 on which it lies. Thanks to this arrangement it is possible to optimise the various sealing and cutting operations as a function of the angles of inclination of the one face or of the other.

Preferably, the first profile 4 and the second profile 12 define a sealing and cutting region 5 with a closed perimeter.

Preferably, the first face 7 and the second 8 face define a cutting edge 9 with a closed perimeter.

In light of this, the first face 7 defines an outer cutting surface in the sealing and cutting region 5 and the second face 8 defines an inner sealing surface in the sealing and cutting region 5.

In alternative embodiments not illustrated, the first face 7 can define an inner cutting surface in the sealing and cutting region 5 and the second face 8 can define an outer sealing surface in the sealing and cutting region 5. In other words, the first face 7 and the second face 8 can be inverted.

Again preferably, the first face 7 of the cutting edge 9 has the first angle α of inclination with a value of between 45° and 80° relative to the plane 10 in which it lies, preferably between 60° and 80°, and still more preferably between 60° and 75°.

Again preferably, the second face 8 of the cutting edge 9 has a second angle β of inclination with a value of between 0° and 45° relative to the plane 10 in which it lies, preferably between 0° and 30°, more preferably between 0° and 15°, and still more preferably between 15° and 30°.

A non-limiting example of an asymmetrical cutting edge 9 with the values of the angle between the values described above is clearly shown in Figure 3.

In other words, different angle values are used for the first face 7 and the second face 8 as a function of the sealing and cutting to be obtained.

More in detail, increasing the angle α of the first face 7 relative to the plane 10 in which it lies improves the cutting action of the material 1; on the contrary, reducing the angle β of the second face 8 relative to the plane 10 in which it lies improves the sealing action. The angles α and β can advantageously be selected as a function of the material.

Therefore, two faces 7 and 8 with different angles of the cutting edge 9 (thus generating an asymmetrical profile) relative to the plane 10 on which it lies have a different function given by the value of the angle: preferably, the face with a smaller angle for sealing and the face with a larger angle for cutting.

It should be noted that the ultrasound sealing and cutting device 100 (or 200) comprises, in cascade, an electrical power signals generator 17; a converter 18 for converting the electrical power signals into mechanical vibrations; the sonotrode 3 comprising an operating head which has the first profile 4; and the contact body 6 (or anvil) of the second profile 12.

In the first embodiment 100, the first profile 4 of the sonotrode 3 has at least one relative stretch with a flat extension, that is to say, parallel to the plane 10 on which it lies.

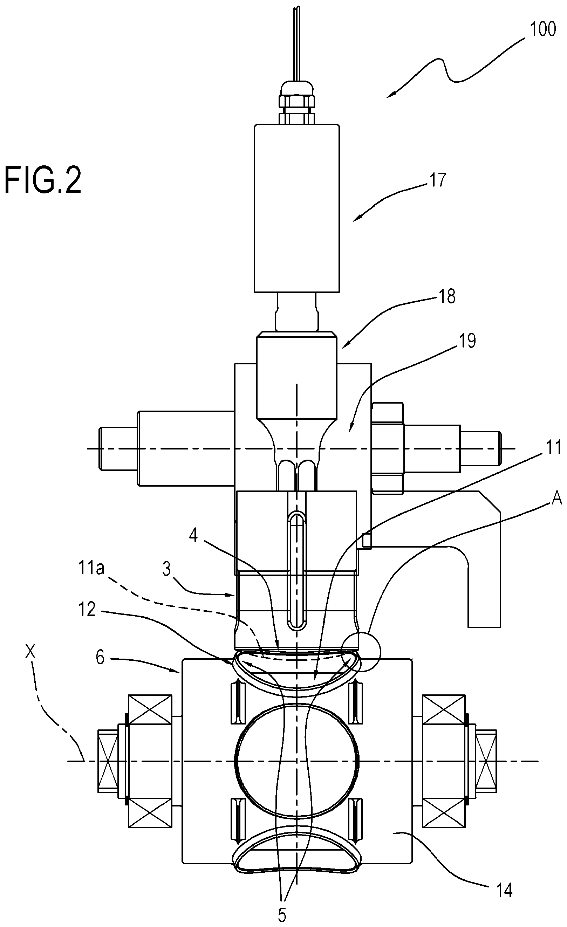

Advantageously, the first profile 4 of the sonotrode 3 has a flat extension (to define a flat contact head, as shown in Figures 1 and 2).

In an alternative embodiment, the first profile 4 of the sonotrode 3 has a curved extension, for example cylindrical, to match the contact body 6. Advantageously, the sonotrode 3 has a counter-impression 11a having a perimeter edge closed and protruding relative to a base surface of the impression 11a.

On the edge of the counter-impression 11a there is the first profile 4 of the sonotrode 3 shaped to match the edge of the impression 11 of the contact body 6 (see dashed line in Figures 1 and 2).

This structure of the device 100, in its different modes for feeding the material 1 in sheets or strips and of the containers 2 (continuous to step mode), is illustrated in Figures 1, 2 and 3.

Again with reference to Figures 1, 2 and 3, preferably the contact body 6 has at least one impression 11 with a closed perimeter consisting of the second asymmetrical profile 12 comprising the first face 7, the second face 8 joined together in the shared cutting edge 9.

Preferably, the contact body 6 has at least one impression 11 equipped with the second asymmetrical profile 12 and with curved extension.

In light of this, the contact body 6 has the at least one impression 11 delimited by the second profile 12 made on the protruding edge of the impression 11.

Again, preferably, the protruding edge of the impression 11 has a curved extension.

In other words, the curved edge extends along a surface of the contact body 6 according to a path away from and towards the plane 10 in which it lies.

Thanks to this feature it is possible to adapt the shapes of the impressions 11 and hence the second profiles 12 (in this case asymmetrical) to a multiplicity of types of contact bodies 6.

Preferably, the contact body 6 comprises a drum 14 rotating continuously, or in step mode, about an axis of rotation X, for example perpendicular to a feed direction of the material 1 in strips or sheet (Figures 1 and 2).

Preferably, the drum 14 has a cylindrical surface on which there are a plurality of impressions 11, defined by the second asymmetrical profile 12 with curved extension. Advantageously, the impressions 11 are evenly distributed on the cylindrical surface of the drum 14.

In the embodiment illustrated in Figures 1 and 2, the drum 14 is rotatable, preferably continuously, about the axis X, whilst the sonotrode 3, during operation, is stationary. The sealing and cutting device 100 comprises suitable actuators 19 to move the sonotrode 3 to an operating position close to the material 1 to be sealed and cut and a non-operating position away from the material 1 to be sealed and cut.

In a variant embodiment of the first or second profile 4 or 12, the second face 8 has a first part perpendicular to the plane 10 in which it lies and a second part parallel to the plane 10 in which it lies in such a way as to form an undercut or a broken line.

In light of this, the second face 8 has at least its second part parallel to the plane 10 on which it lies (0° inclination) defining a sealing area.

It should be noted that the first part of the second face 8 is for fitting between the first face 7 and the actual respective sealing area.

Figures 4 to 6 show a second embodiment of an ultrasound device 200 for sealing and cutting, which does not form part of the invention, wherein the first profile 4 is made according to the variant embodiment described above. More specifically, the second face 8 of the first profile 4 has a first part perpendicular to the plane 10 in which it lies and a second part parallel to the plane 10 in which it lies and the second profile 12 made on the contact body 6 (or anvil) is asymmetrical and shaped to match the first asymmetrical profile 4.

It should be noted that the ultrasound sealing and cutting device 200 (illustrated in Figures 4 to 6) operating in step mode, but comprises the technical features of the structure described above with regard to the sonotrode 3.

The device 200 illustrated in Figure 4 has a contact body 6 which comprises a die 15 having a contact head 16 shaped to match the operating head of the sonotrode 3.

Preferably, the contact head 16 defines the impression 11 with the projecting perimeter edge on which the second profile 12 is made.

On the contact head 16, that is to say, on the edge, there is the second profile 12 which has a contact face 13 designed to couple with the second face 8 (for sealing) of the first profile 4. In other words, the contact face 13 may comprise at least one section inclined by an angle complementary to the angle β, to couple with the second face 8.

Alternatively, the second profile 12 may have at least a plane parallel to the plane 10 on which it lies.

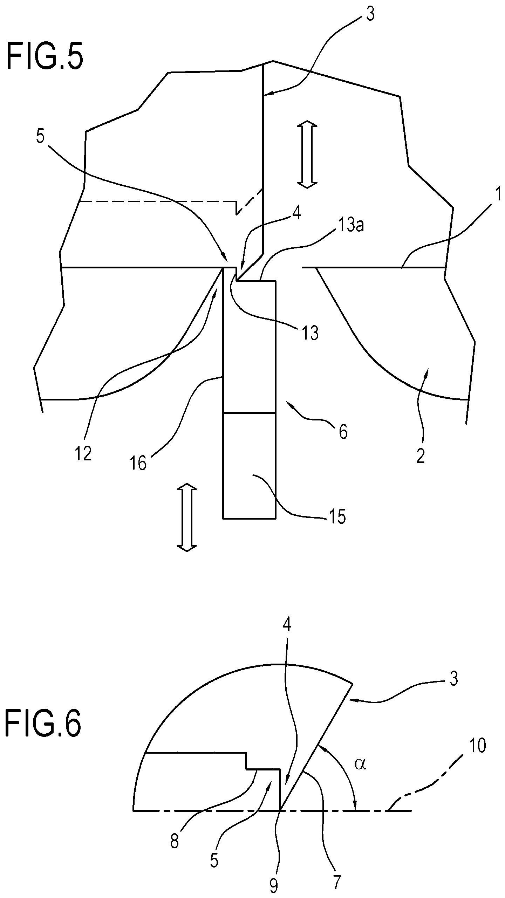

Advantageously, the second profile 12 comprises a contact face 13 having its plane parallel to the plane 10 in which it lies and a relative further surface configured, in use, for coupling to the perpendicular part of the second face 8 (Figure 5), that is, perpendicular to the plane 10 in which it lies.

In light of this, the second profile 12 comprises a further contact face 13a (outside the impression 11) for the contact with the cutting edge 9.

The further face 13a is parallel with the plane 10 on which it lies.

In other words, the combination of first profile 4 and second profile 12 determines a corresponding undercut shape for sealing on the planes (internal) parallel to the plane 10 in which it lies, whilst the cutting edge 9 and the second face 7 implement cutting and run up to the contact point, of the cutting edge 9, with the further face 13a of the second profile 12. This particular geometrical shape of the two profiles allows a precise sealing due to the opposite planes of the two surfaces of the two profiles which correctly hold the portion of material to be sealed. The two surfaces perpendicular to the plane in which it lies allow, on the other hand, the tensioning and cutting in a precise manner and without waste or incorrect relative movements of the film 1 and the container 2 being processed. Advantageously, in an embodiment not illustrated, the second profile 12 of the contact body 6 has a flat extension, parallel to the plane 10 in which it lies (to define a flat contact head), which acts in conjunction with the cutting edge 9.

The second profile 12 may have closed perimeter extension.

The die 15 is movable axially between an operating position, close to the sonotrode 3, and a non-operating position, away from the sonotrode 3.

The sealing and cutting device 200 comprises suitable actuators 19 to move the sonotrode 3 between an operating position close to the material 1 to be sealed and cut and a non-operating position away from the material 1 to be sealed and cut. The sealing and cutting device 200 also comprises actuators 20 for moving the die 15.

The double coordinated movement of sonotrode 3 and die 15 towards and away from each other makes it possible to feed, for example, deep containers (see also Figure 5).

Thanks to the asymmetry of the cutting edge 9, the ultrasound sealing and cutting of material in sheets or strips has a high output and precision irrespective of the shape of the end product.

The asymmetric combination of the first face and the second face of the cutting edge allows high quality sealing and cutting both in the case of linear shapes with a continuous and open profile and in the case that containers must be closed and separated with perimeter shapes having a closed and complex profile (that is to say, complex geometrical shapes), if necessary made using curved profile impressions on rotary drums, even operating continuously.

Moreover, the cutting edge may be made alternatively on the sonotrode or on the contact body, that is to say, on the first profile or on the second profile, and can interact with a flat surface, or shaped in a complementary, or partly complementary manner.

The sealing and cutting device structured in this way can be adapted to any type of machine, with continuous, discontinuous or step mode movement, maintaining a high level of precision in the sealing and in the cutting of the material and irrespective of the operational speeds required.

## Claims

1. An ultrasound device for sealing and cutting material (1) in sheets or strips for closing containers (2) for infusion or extraction products, comprising:
- a sonotrode (3) for emitting mechanical vibrations and having a first profile (4);
- a contact body (6) having a second profile (12) acting in conjunction with the first profile (4) of the sonotrode (3) for defining a sealing and cutting region (5), any one between the first profile (4) of the sonotrode (3) and the second profile (12) of the contact body (6) comprising a first face (7) and a second face (8) joined together to define a shared cutting edge (9); the first face (7) having a first angle (α) of inclination relative to a plane (10) in which it lies coincident with a portion of material (1) in sheets or in strips passing in the sealing and cutting region (5); the second face (8) having a second angle (β) of inclination relative to the plane (10) in which it lies; the first angle (α) of the first face (7) having a value different from the value of the second angle (β) of the second face (8),
**characterised in that** at least the contact body (6) has an impression (11) on the edge of which, with the perimeter closed and protruding from the contact body (6), the second profile (12) is made for delimiting the closed sealing and cutting region in conjunction with the first profile (4) of the sonotrode (3)
and wherein the second profile (12) is continuous, that is, without interruptions on its surfaces, along the entire extension of the edge of the impression (11)
and wherein the contact body (6) has the at least one impression (11) delimited by the second profile (12) made on the protruding edge of the impression (11); the edge having a curved extension,
and wherein the contact body (6) comprises a drum (14) rotating about an axis (X) of rotation; the drum (14) having a plurality of impressions (11), each consisting of the second profile (12) with a curved extension.

2. The device according to claim 1, wherein the first face (7) of the cutting edge (9) has a first angle (α) of inclination with a value of between 45° and 80°, preferably between 60° and 80°, and still more preferably between 75° and 80°, relative to the plane (10) in which it lies.

3. The device according to any one of the preceding claims, wherein the second face (8) of the cutting edge (9) has a second angle (β) of inclination with a value of between 0° and 45°, preferably between 0° and 30°, and still more preferably between 15° and 30°, relative to the plane (10) in which it lies.

4. The device according to claim 1 or 2, wherein the second face (8) has a first part perpendicular to the plane (10) in which it lies and a second part parallel to the plane (10) in which it lies, which defines a sealing area.

5. The device according to any one of the preceding claims, wherein the first profile (4) and the second profile (12) define the sealing and cutting region (5) with closed perimeter, and wherein the first face (7) defines a cutting surface in the sealing and cutting region (5) and the second face (8) defines a sealing surface in the sealing and cutting region (5).

6. The device according to any one of the preceding claims, wherein the first face (7) and the second face (8) define a cutting edge (9) with a closed perimeter.

7. The device according to any one of the preceding claims, wherein the contact body (6) has the at least one impression (11) delimited by the second profile (12), the first face (7) and the second face (8) joined together to form the cutting edge (9) being formed on the second profile (12).

8. The device according to the preceding claim, wherein the at least one impression (11) has the second profile (12) with a curved extension.

## Patentansprüche

1. Ultraschallvorrichtung zum Versiegeln und Schneiden von Material (1) in Folien oder Streifen zum Verschließen von Behältern (2) für Aufguss- oder Brühprodukte, umfassend:
- eine Sonotrode (3) zum Emittieren mechanischer Schwingungen, aufweisend ein erstes Profil (4);
- einen Kontaktkörper (6), aufweisend ein zweites Profil (12), wirkend in Verbindung mit dem ersten Profil (4) der Sonotrode (3) zum Definieren einer Versiegelungs- und Schneidregion (5), wobei ein zwischen dem ersten Profil (4) der Sonotrode (3) und dem zweiten Profil (12) des Kontaktkörpers (6) eine erste Seitenfläche (7) und eine zweite Seitenfläche (8) umfasst, die zusammengefügt sind, um eine gemeinsame Schneidkante (9) zu definieren, wobei die erste Seitenfläche (7) einen ersten Neigungswinkel (α) relativ zu einer Ebene (10) aufweist, in der sie übereinstimmend mit einem Abschnitt von Material (1) in Folien oder Streifen liegt, verlaufend in der Versiegelungs- und Schneidregion (5), wobei die zweite Seitenfläche (8) einen zweiten Neigungswinkel (β) relativ zur Ebene (10), in der sie liegt, aufweist, wobei der erste Winkel (α) der ersten Seitenfläche (7) einen Wert aufweist, der sich vom Wert des zweiten Winkels (β) der zweiten Seitenfläche (8) unterscheidet,
**dadurch gekennzeichnet, dass** zumindest der Kontaktkörper (6) eine Vertiefung (11) an der Kante aufweist, aus der bei geschlossenem und aus dem Kontaktkörper (6) hervorstehendem Umfang das zweite Profil (12) ausgebildet ist, um die geschlossene Versiegelungs- und Schneidregion in Verbindung mit dem ersten Profil (4) der Sonotrode (3) zu begrenzen, und wobei das zweite Profil (12) entlang der gesamten Ausdehnung der Kante der Vertiefung (11) durchgehend ist, d. h., keine Unterbrechungen auf seinen Oberflächen aufweist, und wobei die mindestens eine Vertiefung (11) des Kontaktkörpers (6) durch das zweite Profil (12) begrenzt ist, die auf der hervorstehenden Kante der Vertiefung (11) ausgebildet ist, wobei die Kante eine gekrümmte Ausdehnung aufweist, und wobei der Kontaktkörper (6) eine Trommel (14) umfasst, die sich um eine Rotationsachse (X) dreht, wobei die Trommel (14) eine Vielzahl an Vertiefungen (11) aufweist, die jeweils aus dem zweiten Profil (12) mit einer gekrümmten Ausdehnung bestehen.

2. Vorrichtung nach Anspruch 1, wobei die erste Seitenfläche (7) der Schneidkante (9) einen ersten Neigungswinkel (α) mit einem Wert zwischen 45° and 80°, vorzugsweise zwischen 60° und 80° und noch besser zwischen 75° and 80° relativ zur Ebene (10), in der sie liegt, aufweist.

3. Vorrichtung nach einem der vorhergehenden Ansprüche, wobei die zweite Seitenfläche (8) der Schneidkante (9) einen zweiten Neigungswinkel (β) mit einem Wert zwischen 0° and 45°, vorzugsweise zwischen 0° und 30° und noch besser zwischen 15° and 30° relativ zur Ebene (10), in der sie liegt, aufweist.

4. Vorrichtung nach Anspruch 1 oder 2, wobei die zweite Seitenfläche (8) einen ersten Teil aufweist, der senkrecht zur Ebene (10), in der sie liegt, angeordnet ist, und einen zweiten Teil, der parallel zur Ebene (10), in der sie liegt, angeordnet ist, der einen Versiegelungsbereich definiert.

5. Vorrichtung nach einem der vorhergehenden Ansprüche, wobei das erste Profil (4) und das zweite Profil (12) die Versiegelungs- und Schneidregion (5) mit geschlossenem Umfang definieren, und wobei die erste Seitenfläche (7) eine Schneidoberfläche in der Versiegelungs- und Schneidregion (5) definiert und die zweite Seitenfläche (8) eine Versiegelungsoberfläche in der Versiegelungs- und Schneidregion (5) definiert.

6. Vorrichtung nach einem der vorhergehenden Ansprüche, wobei die erste Seitenfläche (7) und die zweite Seitenfläche (8) eine Schneidkante (9) mit geschlossenem Umfang definieren.

7. Vorrichtung nach einem der vorhergehenden Ansprüche, wobei der Kontaktkörper (6) mindestens eine Vertiefung (11) aufweist, die durch das zweite Profil (12) begrenzt ist, wobei die erste Seitenfläche (7) und die zweite Seitenfläche (8) zusammengefügt sind, um die Schneidkante (9) zu formen, die auf dem zweiten Profil (12) ausgebildet ist.

8. Vorrichtung nach dem vorhergehenden Anspruch, wobei das zweite Profil (12) von mindestens einer Vertiefung (11) eine gekrümmte Ausdehnung aufweist.

## Revendications

1. Dispositif à ultrasons pour le scellement et le découpage de matériau (1) en feuilles ou en bandes pour fermer des récipients (2) pour des produits d'infusion ou d'extraction, comprenant :
- une sonotrode (3) servant à émettre des vibrations mécaniques et comportant un premier profil (4) ;
- un corps de contact (6) comportant un second profil (12) agissant conjointement avec le premier profil (4) de la sonotrode (3) pour définir une région de scellement et de découpage (5), l'un quelconque entre le premier profil (4) de la sonotrode (3) et le second profil (12) du corps de contact (6) comprenant un premier côté (7) et un second côté (8) assemblés ensemble pour définir un bord de découpe commun (9) ; le premier côté (7) comportant un premier angle (α) d'inclinaison par rapport à un plan (10) dans lequel il repose coïncidant avec une portion de matériau (1) en feuilles ou en bandes passant dans la région de scellement et de découpage (5) ; le second côté (8) comportant un second angle (β) d'inclinaison par rapport au plan (10) dans lequel il repose ; le premier angle (α) du premier côté (7) comportant une valeur différente de la valeur du second angle (β) du second côté (8),
**caractérisé en ce qu'**au moins le corps de contact (6) comporte une impression (11) sur le bord de laquelle, avec le périmètre fermé et dépassant du corps de contact (6), le second profil (12) est réalisé pour délimiter la région de scellement et de découpage conjointement au premier profil (4) de la sonotrode (3), et dans lequel le second profil (12) est continu, c'est-à-dire, sans interruptions sur ses surfaces, le long de toute l'extension du bord de l'impression (11), et dans lequel le corps de contact (6) comporte l'au moins une impression (11) délimitée par le second profil (12) réalisé sur le bord en saillie de l'impression (11) ; le bord comportant une extension incurvée, et dans lequel le corps de contact (6) comprend un tambour (14) tournant autour d'un axe (X) de rotation ; le tambour (14) comportant une pluralité d'impressions (11), chacune consistant en le second profil (12) ayant une extension incurvée.

2. Dispositif selon la revendication 1, dans lequel le premier côté (7) du bord de découpe (9) comporte un premier angle (α) d'inclinaison ayant une valeur comprise entre 45 et 80°, de préférence entre 60 et 80°, encore plus préférablement entre 75 et 80°, par rapport au plan(10) dans lequel il repose.

3. Dispositif selon l'une quelconque des revendications précédentes, dans lequel le second côté (8) du bord de découpe (9) comporte un second angle (β) d'inclinaison ayant une valeur comprise entre 0 et 45°, de préférence entre 0 et 30°, encore plus préférablement entre 15 et 30°, par rapport au plan(10) dans lequel il repose.

4. Dispositif selon la revendication 1 ou 2, dans lequel le second côté (8) comporte une première partie perpendiculaire au plan (10) dans lequel il repose et une seconde partie parallèle au plan (10) dans lequel il repose qui définit une région de scellement.

5. Dispositif selon l'une quelconque des revendications précédentes, dans lequel le premier profil (4) et le second profil (12) définissent la région de scellement et de découpage (5) avec un périmètre fermé, et dans lequel le premier côté (7) définit une surface de découpage dans la région de scellement et de découpage (5) et le second côté (8) définit une surface de scellement dans la région de scellement et de découpage (5) .

6. Dispositif selon l'une quelconque des revendications précédentes, dans lequel le premier côté (7) et le second côté (8) définissent un bord de découpage (9) avec un périmètre fermé.

7. Dispositif selon l'une quelconque des revendications précédentes, dans lequel le corps de contact (6) comporte l'au moins une impression (11) délimitée par le second profil (12), le premier côté (7) et le second côté (8) sont unis ensemble pour former le bord de découpage (9) étant formé sur le second profil (12).

8. Dispositif selon la revendication précédente, dans lequel l'au moins une impression (11) comporte le second profil (12) avec une extension incurvée.
